# EUROPEAN PATENT APPLICATION

(11) **EP 4 761 068 A1**
(43) Date of publication of application: **17.06.2026**
(21) Application number: 24881383.4
(22) Date of filing: 30.09.2024
(51) Int. Cl.: H02K 1/27, H02K 1/2713, H02K 1/274, H02K 1/276

(54) **ROTOR STRUCTURE AND ELECTRIC MOTOR**

(30) Priority: 24.10.2023 CN 202311390148
(71) Applicant: Gree Electric Appliances, Inc. of Zhuhai, Zhuhai, Guangdong 519031 (CN); Zhuhai Kaibang Motor Manufacture Co., Ltd., Zhuhai, Guangdong 519110 (CN)
(72) Inventor: CHEN, Bin, Zhuhai, Guangdong 519031 (CN); XIAO, Yong, Zhuhai, Guangdong 519031 (CN); LI, Xia, Zhuhai, Guangdong 519031 (CN); SHI, Jinfei, Zhuhai, Guangdong 519031 (CN); WANG, Qingkai, Zhuhai, Guangdong 519031 (CN)
(74) Representative: Zacco GmbH
(86) International application number: PCT/CN2024/122992
(87) International publication number: WO 2025/087017

(57) **Abstract**

Provided are a rotor structure and a motor. The rotor structure includes a rotor core, first permanent magnets and a second permanent magnet, wherein the rotor core is provided with mounting slots, the first permanent magnets are mounted in the mounting slots respectively, and in an axial direction of the rotor core, an axial height of each of the first permanent magnets is greater than an axial height of the rotor core; at least one axial end of the rotor core is provided with the second permanent magnet, slots are disposed on the second permanent magnet, a part of the each of the first permanent magnets protruding from the rotor core in the axial direction is inserted into a corresponding slot of the slots, the first permanent magnets are magnetized in a radial direction and/or a tangential direction of the rotor core, and the second permanent magnet is magnetized in an axial direction of the rotor core, at least two faces of the part of the each of the first permanent magnets protruding from the rotor core in the axial direction are surrounded by the second permanent magnet. According to the rotor structure of the present invention, the magnetizing effect of an electric motor is able to be improved, and the magnetic leakage of an axial end portion of a first permanent magnet is reduced; in addition, the number of components is small, the assembling steps are fewer, the assembling is simple, and the production cost is low.

## Description

### Cross-Reference to Related Application

This application claims priority to Chinese Patent Application No. 202311390148.6, filed with the Chinese Patent Office on October 24, 2023 and entitled "Rotor structure and motor".

### Technical Field

The present invention relates to the field of electric motor technologies, and in particular, to a rotor structure and a motor.

### Background

With the improvement of the energy efficiency standard of a motor, higher requirements have been put forward for the energy efficiency level of the motor. For a permanent magnet motor, it is necessary to further improve the high efficiency and high torque density of the motor.

At present, among technical means to improve the motor efficiency and the torque density, one technical means is to embed permanent magnets to obtain a larger air gap flux density and a larger magnetic flux. However, due to a fixed magnetic circuit structure of a rotor, the improvement in energy efficiency is limited. Another means is to use a rotor structure to increase the salient pole ratio of the motor and increase the reluctance torque of the motor to compensate for the defect of the permanent magnet torque, and the efficiency is able to be equivalent to that of the permanent magnet motor. However, usually, a larger rotor volume is required, so that the torque density of the motor is inferior to that of the permanent magnet motor.

Therefore, for a current motor, how to further achieve high efficiency and high torque density of the motor is an urgent problem to be solved.

A permanent magnet rotor assembly is disclosed in a comparison document 201880064666.X. Two sets of permanent magnets in the permanent magnet rotor assembly (one set is magnetized along a circumferential direction of the rotor, and a second set provides a magnetic flux along an axial direction of the rotor) generate a magnetic flux gathered through pole pieces, there is an end plate made of a magnetic material, a circumferential magnetized magnet is placed in a circumferential gap between pole pieces, and a magnet providing an axial magnetic flux is placed in a gap between a pole piece array and the end plate. A magnetic end plate in Reference Document is used to provide a return path for the magnetic flux from the magnet providing the axial magnetic flux. However, in the field of home appliances, a rotor structure comprising a plurality of magnetic pole pieces, a plurality of scattered magnets, and magnetic end plates has many parts and components, is difficult in fixation of the magnetic end plates, and large in assembly difficulty of rotor assemblies, leading to high production and assembly costs, and making practical inventions difficult.

### Summary

The main purpose of the present invention is to provide a rotor structure and a motor, which is able to improve the magnetizing effect of the electric motor and reduce the magnetic leakage of an axial end part of a first permanent magnet. Moreover, the present invention has the advantages of less components, less assembly steps, simple assembly, and low production costs.

In order to achieve the described object, according to one aspect of the present invention, provided is rotor structure, including a rotor core, first permanent magnets and a second permanent magnet, wherein the rotor core is provided with mounting slots, the first permanent magnets are mounted in the mounting slots respectively, and in an axial direction of the rotor core, an axial height of each of the first permanent magnets is greater than an axial height of the rotor core; the second permanent magnet is disposed at at least one axial end of the rotor core, slots are disposed on the second permanent magnet, a part of the each of the first permanent magnets protruding from the rotor core in the axial direction is inserted into a corresponding slot of the slots, the first permanent magnets are magnetized in a radial direction and/or a tangential direction of the rotor core, and the second permanent magnet is magnetized in an axial direction of the rotor core, at least two faces of the part of the each of the first permanent magnets protruding from the rotor core in the axial direction are surrounded by the second permanent magnet.

In some embodiments, the second permanent magnet is provided with at least one hole structure.

In some embodiments, projection is performed on an end surface of the rotor core along the axial direction of the rotor core, and in a projection plane, a shape of the hole structure is adapted to a shape of the rotor core at a corresponding position.

In some embodiments, the second permanent magnet is provided with an identification portion.

In some embodiments, the identification portion is disposed on an end surface of a side of the second permanent magnet close to and/or away from the rotor core.

In some embodiments, the identification portion is provided in an adjacent area of the at least one hole structure.

In some embodiments, a number of the at least one hole structure arranged on the second permanent magnet is not less than 2.

In some embodiments, the second permanent magnet is an injection-molded magnetic steel.

In some embodiments, the second permanent magnet includes an annular portion and magnetic pole portions, and the magnetic pole portions are connected by the annular portion to form an integral body.

In some embodiments, the annular portion is located on a radial inner side of the second permanent magnet, at least one of the slots is formed between each pair of adjacent magnetic pole portions, the magnetic pole portions are radial along a circumferential direction of the annular portion, and are connected to the annular portion via connecting ribs, thereby forming the integral body with the annular portion.

In some embodiments, a through hole is formed between the annular portion and an end surface of the each of the first permanent magnets on a side close to a rotating axis, and the through hole penetrates through the rotor core and the second permanent magnet in the axial direction.

In some embodiments, the second permanent magnet further includes first permanent magnet limiting portions and magnetic pole portions, and at least one of the first permanent magnet limiting portions is provided between each pair of adjacent magnetic pole portions and connects the pair of adjacent magnetic pole portions, such that the magnetic pole portions form an integral structure.

In some embodiments, the first permanent magnet limiting portions are located on a radial outer side of the slots and are disposed in correspondence with the slots, and the each of the first permanent magnet limiting portions is connected with the second permanent magnet on both sides of the each of the first permanent magnet limiting portions in a circumferential direction.

In some embodiments, the slots provided on the second permanent magnet penetrate and/or do not penetrate the second permanent magnet, and a number of the slots is the same as a number of poles of a rotor.

In some embodiments, the second permanent magnet cooperates with the first permanent magnets through the slots provided thereon, the first permanent magnets and the second permanent magnet are both magnetic flux sources, and except the rotor core, no other magnetic conductive parts are arranged in the rotor structure.

In some embodiments, the magnetic pole portions are formed between adjacent slots; on a plane perpendicular to the axial direction of the rotor core, a radially outer side between the adjacent magnetic pole portions is disconnected or connected, or part of a radially outer side between the adjacent magnetic pole portions is disconnected, and part of the radially outer side between the adjacent magnetic pole portions is connected; a radially inner side between the adjacent magnetic pole portions is disconnected or connected, or part of the radially inner side between the adjacent magnetic pole portions is disconnected, and part of the radially inner side between the adjacent magnetic pole portions is connected.

In some embodiments, a polar region of one of the magnetic pole portions corresponds to a position of a polar region of the rotor core, and on a plane perpendicular to the axial direction of the rotor core, a shape of the polar region of the one of the magnetic pole portions is adapted to a shape of a corresponding polar region of the rotor core.

In some embodiments, at least one end of axial ends of the rotor core is provided with the second permanent magnet, and a number of second permanent magnets arranged in the rotor structure is not less than one.

In some embodiments, the first permanent magnets and the second permanent magnet are divided into a plurality of polar regions after being magnetized, and N and S poles of the first permanent magnets are magnetized alternately in the radial direction and/or the tangential direction of the rotor core; and N and S poles of the second permanent magnet are magnetized alternately in the axial direction of the rotor core.

In some embodiments, a polarity of the second permanent magnet on a side close to the rotor core is a first polarity, and polarities of two first permanent magnets located on two sides adjacent to the second permanent magnet on sides close to the rotor core are the first polarity.

In some embodiments, the axial height of the rotor core is x, the axial height of the each of the first permanent magnets is y, y > x, an axial height of the second permanent magnet is z1, an axial height of each of the magnetic pole portion is z2, z2 ≤ z1, where 0.2*(y-x) ≤ z1 ≤ 1.6*(y-x).

In some embodiments, 2*z2 ≥ (y-x).

In some embodiments, z2=0.5*(y-x).

In some embodiments, on a plane perpendicular to the axial direction of the rotor core, a length of a connecting line between a central axis of the rotor and any point on an end edge of the second permanent magnet on a side close to the rotating shaft is Di2, a length of the connecting line between the central axis of the rotor and a center of an end edge of a pole of the each of the first permanent magnets on a side close to the rotating shaft is Di3, max (Di2) ≥ 0.75*Di3.

In some embodiments, max (Di2) ≥ Di3.

In some embodiments, an outer peripheral wall of the rotor core includes a plurality of arc-shaped surfaces disposed at intervals, and along a circumferential direction of the rotor core, a distance between a single arc-shaped surface of the plurality of arc-shaped surfaces and the central axis of the rotor core gradually decreases from a middle to two ends.

In some embodiments, on a plane perpendicular to the axial direction of the rotor core, a length of a connecting line between a central axis of the rotor and any point on an end edge of the second permanent magnet on a side close to an air gap is Do2, a length of a connecting line between the central axis of the rotor and a center of an end edge of a pole of the each of the first permanent magnets on a side close to the air gap side is Do3, max (Do2) ≤ 1.2*Do3.

In some embodiments, |max (Do2)-Do3| ≤ 1.5mm.

In some embodiments, the second permanent magnet is an injection-molded ferrite or an injection-molded neodymium iron boron.

In some embodiments, the each of the first permanent magnets is a sintered permanent magnet or an injection-molded permanent magnet.

In some embodiments, an intrinsic coercivity of the second permanent magnet is lower than an intrinsic coercivity of the first permanent magnets.

In some embodiments, the rotor core is formed by laminating silicon steel sheets, or the rotor core is an injection-molded magnetic steel, and on a plane perpendicular to the axial direction of the rotor core, N and S poles of the rotor core are magnetized alternately in a radial direction.

In some embodiments, the second permanent magnet is injection-molded over or filled onto the rotor core, or the second permanent magnet, the rotor core and the first permanent magnets are separately manufactured and then are assembled together.

In some embodiments, the rotor structure is filled with a molding compound at ends and internal gaps and is molded into a whole body, or the rotor structure is assembled and fixed together by using a fastener.

According to another aspect of this invention, an electric motor is provided, including a stator structure and the rotor structure above-mentioned, and the stator structure is sleeved on an outer peripheral side of the rotor structure.

In some embodiments, the axial height of the rotor core is x; the stator structure includes a stator core, an axial height of the stator core is w, x ≥ w.

In some embodiments, wherein x ≥ 1.05*w.

In some embodiments, an axial height of the rotor structure is v, and an axial height of the stator core is w, wherein v ≥ 1.4*w.

Applying the technical solution of the present invention, a rotor structure includes a rotor core, first permanent magnets and a second permanent magnet, wherein the rotor core is provided with mounting slots, the first permanent magnets are mounted in the mounting slots respectively, and in an axial direction of the rotor core, an axial height of each of the first permanent magnets is greater than an axial height of the rotor core ; the second permanent magnet is disposed at at least one axial end of the rotor core, slots are disposed on the second permanent magnet, a part of the each of the first permanent magnets protruding from the rotor core in the axial direction is inserted into a corresponding slot of the slots, the first permanent magnets are magnetized in a radial direction and/or a tangential direction of the rotor core, and the second permanent magnet is magnetized in an axial direction of the rotor core, at least two faces of the part of the each of the first permanent magnets protruding from the rotor core in the axial direction are surrounded by the second permanent magnet.

A first permanent magnet and a second permanent magnet are simultaneously arranged in a rotor, and the first permanent magnet and the second permanent magnet jointly provide a magnetic flux linkage for a motor, so that an output of the motor is able to be increased. By a design of a relative position between the first permanent magnets and the second permanent magnet, each of the first permanent magnets is inserted into the corresponding slot of the second permanent magnet, the first permanent magnets serve as a part of a magnetic circuit for the magnetic flux lines of the second permanent magnet to flow, and draw the magnetic flux lines of the second permanent magnet into the rotor core. The magnetic flux lines of the first permanent magnet and the second permanent magnet are magnetically concentrated on the rotor core, and then enter an air gap and a stator, thereby greatly improving the magnetic flux concentration effect of the rotor. At least two faces of the part of the first permanent magnet axially protruding from the rotor core are limited to be surrounded by the second permanent magnet, so that the magnetic flux lines of the second permanent magnet have a path entering the rotor core to form a magnetic circuit, thereby ensuring the magnetic flux concentration improvement effect of the rotor.

In addition, no other magnetically conductive components are arranged in the rotor structure except the rotor core, resulting in fewer components, fewer assembling steps, simple assembly and low production cost. Meanwhile, the magnetic flux lines leaking from the axial end portion of the first permanent magnet need to pass through the second permanent magnet to form a closed loop. The second permanent magnet, which is a non-magnetically conductive component, weakens the end portion magnetic flux leakage of the first permanent magnet. Furthermore, the flowing direction of the magnetic flux lines of the second permanent magnet is opposite to the flowing direction of the magnetic flux lines leaking from the end portion of the first permanent magnet, and a mutual exclusion effect exists, which further reduces the axial end portion magnetic flux leakage of the first permanent magnet and improves the magnetic field strength of the rotor.

### Brief Description of the Drawings

The accompanying drawings, which form a part of the present invention, are used for providing a further understanding of the present invention. The schematic embodiments and illustrations of the present invention are used for explaining the present invention, and do not form improper limits to the present invention. In the drawings:
Fig. 1 shows an exploded structural view of a rotor structure according to an embodiment of the present invention;
Fig. 2 shows a three-dimensional structural view of a rotor structure according to an embodiment of the present invention;
Fig. 3 shows a three-dimensional structural view of a rotor structure according to an embodiment of the present invention;
Fig. 4 shows an exploded structural view of a rotor structure according to an embodiment of the present invention;
Fig. 5 shows a three-dimensional structural view of a rotor structure according to an embodiment of the present invention;
Fig. 6 shows an exploded structural view of a rotor structure according to an embodiment of the present invention;
Fig. 7 shows a partially exploded structural view of a rotor structure according to an embodiment of the present invention;
Fig. 8 shows a three-dimensional structural view of a rotor structure according to an embodiment of the present invention;
Fig. 9 shows a three-dimensional structural view of a second permanent magnet of a rotor structure according to an embodiment of the present invention;
Fig. 10 shows a three-dimensional structural view of a rotor structure according to an embodiment of the present invention;
Fig. 11 shows an exploded structural view of a rotor structure according to an embodiment of the present invention;
Fig. 12 shows a three-dimensional structural view of a rotor structure according to an embodiment of the present invention;
Fig. 13 shows a three-dimensional structural view of a rotor structure according to an embodiment of the present invention;
Fig. 14 shows an exploded structural view of a rotor structure according to an embodiment of the present invention;
Fig. 15 shows a three-dimensional structural view of a rotor structure according to an embodiment of the present invention;
Fig. 16 shows a top structural view of a rotor structure according to an embodiment of the present invention;
Fig. 17 shows a cross-sectional view taken along the line A-A of Fig. 16;
Fig. 18 shows a side structural view of a rotor structure according to an embodiment of the present invention;
Fig. 19 shows a side structural view of a second permanent magnet of a rotor structure according to an embodiment of the present invention;
Fig. 20 shows a top structural view of a rotor structure according to an embodiment of the present invention;
Fig. 21 shows a top structural view of a partial structure of a rotor structure according to an embodiment of the present invention;
Fig. 22 shows a side structural view of a motor according to the present invention;
Fig. 23 shows a schematic view of a polarity direction of a rotor structure according to the present invention;
Fig. 24 shows a magnetic circuit principle view of a rotor structure according to the present invention;
Fig. 25 shows a comparison view of a magnetic flux concentration coefficient between a motor according to an embodiment of the present invention and a motor of a related art;
Fig. 26 shows a comparison view of a magnetic flux leakage coefficient between a motor according to an embodiment of the present invention and a motor of a related art;
Fig. 27 shows a comparison view of a no-load magnetic flux linkage between a motor according to an embodiment of the present invention and a motor of a related art;
Fig. 28 shows a comparison view of an air-gap magnetic flux density between a motor according to an embodiment of the present invention and a motor of a related art;
Fig. 29 shows a comparison view of a torque-current characteristic between a motor according to an embodiment of the present invention and a motor of a related art;
Fig. 30 shows a comparison view of a torque ripple between a motor according to an embodiment of the present invention and a motor of a related art;
Fig. 31 shows a comparison view of a utilization rate of a first permanent magnet between a motor according to an embodiment of the present invention and a motor of a related art; and
Fig. 32 shows a comparison view of a leakage magnetic flux of a first permanent magnet between a motor according to an embodiment of the present invention and a motor of a related art.

The figures include the following reference signs:
11, rotor core; 111, limiting protrusion; 12, first permanent magnet; 13, through hole; 21, second permanent magnet; 211, hole structure; 213, slot; 214, magnetic pole portion; 215, annular portion; 216, first permanent magnet limiting portion; 31, stator core.

### Detailed Description of the Embodiments

It is important to note that the embodiments of the present disclosure and the characteristics in the embodiments can be combined under the condition of no conflicts. The present disclosure will be described below with reference to the drawings and embodiments in detail.

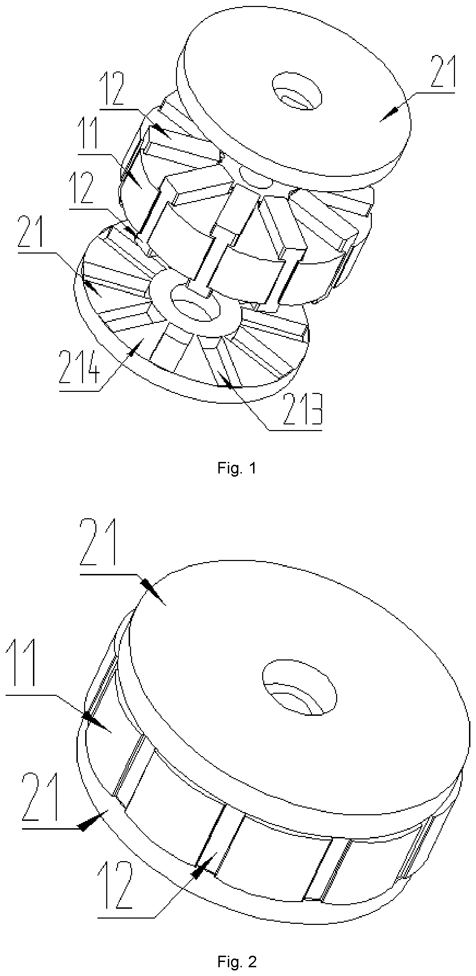

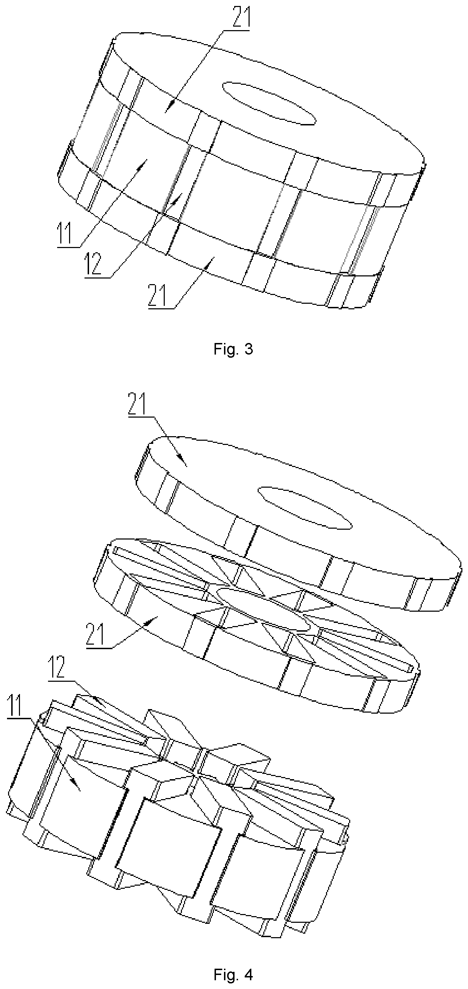

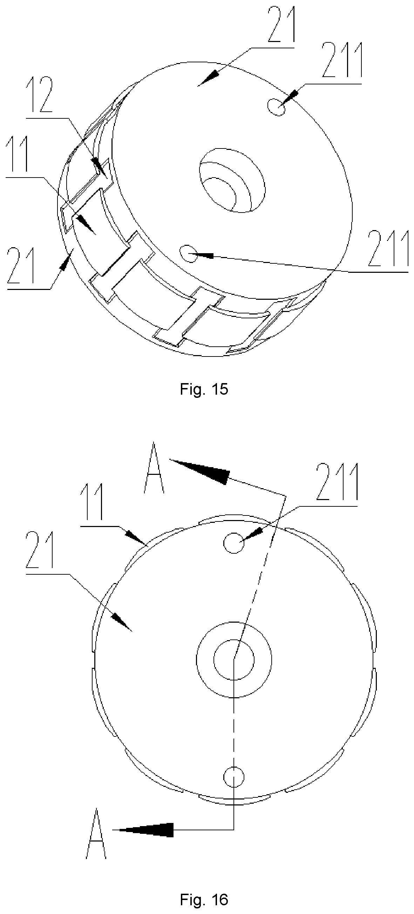

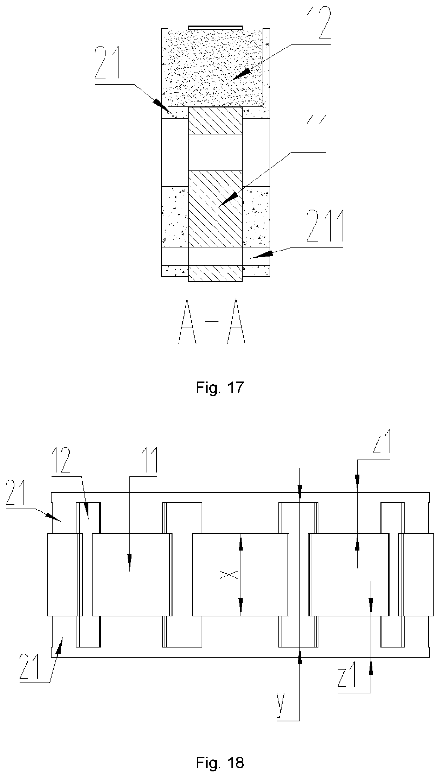

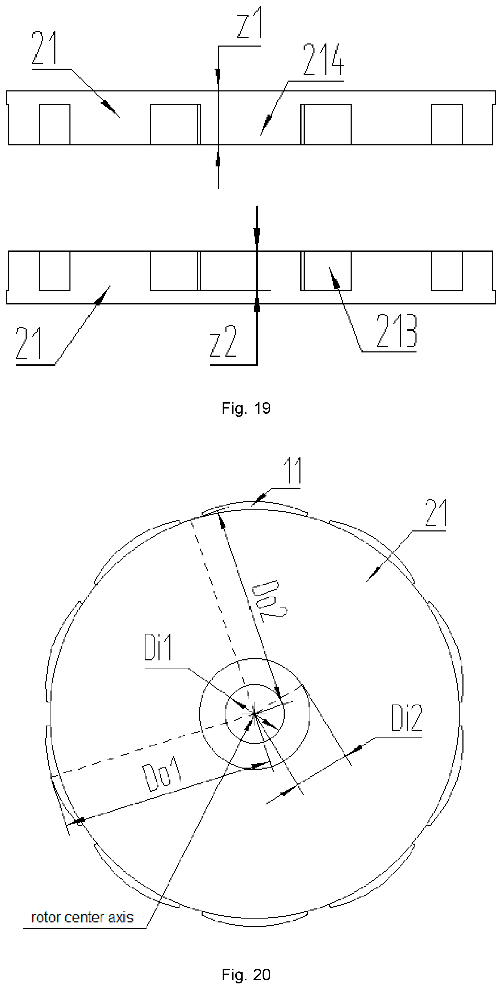

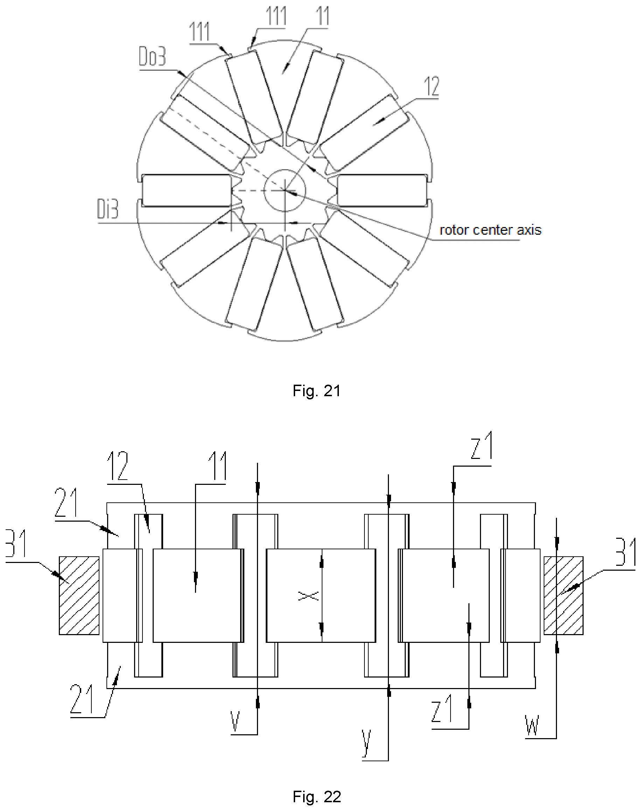

With reference to what are shown in Figs. 1 to 23, according to an embodiment of the present invention, the rotor structure includes a rotor core 11, first permanent magnets 12 and a second permanent magnet 21, wherein the rotor core 11 is provided with mounting slots, the first permanent magnets 12 are mounted in the mounting slots respectively, and in an axial direction of the rotor core 11, an axial height of each of the first permanent magnets 12 is greater than an axial height of the rotor core 11; at least one axial end of the rotor core 11 is provided with the second permanent magnet 21, slots 213 are disposed on the second permanent magnet 21, a part of the each of the first permanent magnets 12 protruding from the rotor core 11 in the axial direction is inserted into a corresponding slot of the slots 213, the first permanent magnets 12 are magnetized in a radial direction and/or a tangential direction of the rotor core 11, and the second permanent magnet 21 is magnetized in an axial direction of the rotor core 11, at least two faces of the part of the each of the first permanent magnets 12 protruding from the rotor core 11 in the axial direction are surrounded by the second permanent magnet 21.

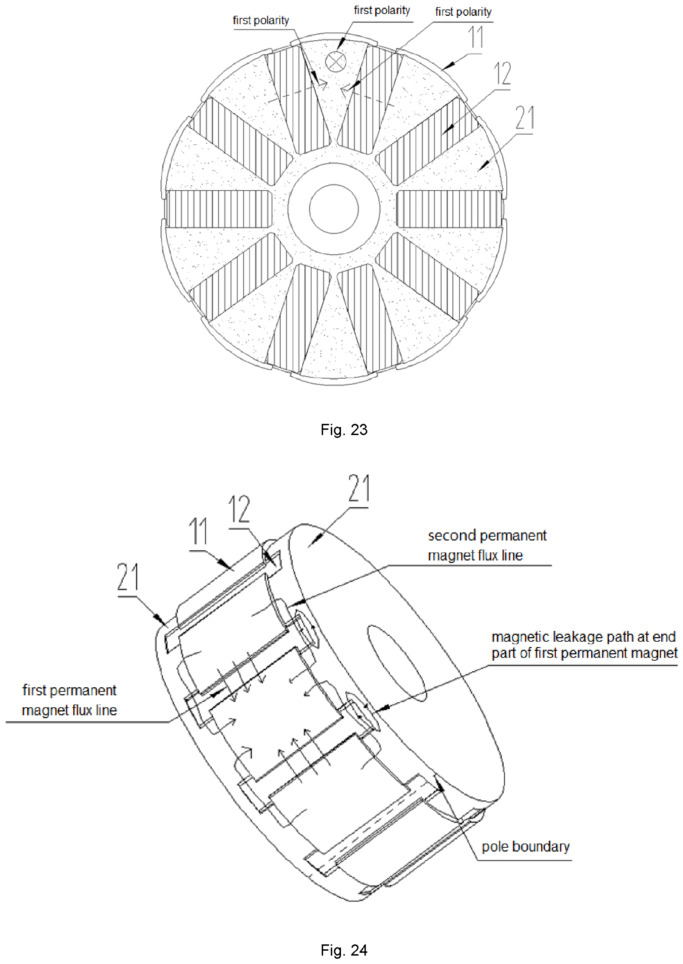

As shown in Fig. 24, the first permanent magnet 12 and the second permanent magnet 21 are simultaneously arranged in a rotor, and the first permanent magnet 12 and the second permanent magnet 21 jointly provide a magnetic flux linkage for a motor, so that an output of the motor is able to be increased. By a design of a relative position between the first permanent magnets 12 and the second permanent magnet 21, each of the first permanent magnets 12 is inserted into the corresponding slot 213 of the second permanent magnet 21, the first permanent magnets 12 serve as a part of a magnetic circuit for the magnetic flux lines of the second permanent magnet 21 to flow, and draws the magnetic flux lines of the second permanent magnet 21 into the rotor core 11. The magnetic flux lines of the first permanent magnet 12 and the second permanent magnet 21 are magnetically concentrated on the rotor core 11, and then enter an air gap and a stator, thereby greatly improving the magnetic flux concentration effect of the rotor.

In addition, no other magnetically conductive components are arranged in the rotor structure except the rotor core 11, resulting in fewer components, fewer assembling steps, simple assembly and low production cost. Meanwhile, the magnetic flux lines leaking from the axial end portion of the first permanent magnet 12 need to pass through the second permanent magnet 21 to form a closed loop. The second permanent magnet 21, which is a non-magnetically conductive component, weakens the end portion magnetic flux leakage of the first permanent magnet 12. Furthermore, the flowing direction of the magnetic flux lines of the second permanent magnet 21 is opposite to the flowing direction of the magnetic flux lines leaking from the end portion of the first permanent magnet 12, and a mutual exclusion effect exists, which further reduces the axial end portion magnetic flux leakage of the first permanent magnet 12 and improves the magnetic field strength of the rotor.

With the matching design of the first permanent magnet 12 and the second permanent magnet 21 in the rotor structure, the first permanent magnet 12 provides a return magnetic circuit for the magnetic flux of the second permanent magnet 21, and there is no need to additionally add a magnetically conductive end plate matched with the magnetic circuit of the second permanent magnet 21, so that magnetic conductivity dependence of the second permanent magnet 21 on the magnetically conductive end plate is able to be eliminated, and meanwhile, rotor components are reduced, so that assembly steps are fewer, assembly is simple, and production cost is low.

In one embodiment, the first permanent magnet 12 is magnetized in the radial direction and/or the tangential direction of the rotor core 11, and the second permanent magnet 21 is magnetized in the axial direction of the rotor core 11. The magnetic flux lines entering the rotor core 11 from different directions form a magnetic flux concentration effect on the rotor core 11, so that the magnetic field strength of the rotor is improved, and a utilization rate of the rotor core 11 is increased.

As shown in Fig. 24, in the present embodiment, the first permanent magnet 12 with a larger axial height is configured to be tangentially magnetized, and the second permanent magnet 21 arranged at the axial end portion of the rotor core 11 is configured to be axially magnetized, so that continuity of magnetic flux linkage of the first permanent magnet 12 and the second permanent magnet 21 is able to be realized, the first permanent magnet 12 and the second permanent magnet 21 is able to jointly and more effectively provide magnetic flux linkage for the motor, and the output of the motor is effectively increased.

In one embodiment, the first permanent magnet 12 is designed as a combined magnet with tangential magnetization and radial magnetization.

In one embodiment, a magnetization direction of the second permanent magnet 21 is not limited to be parallel to the axial direction of the rotor core 11, and may also form an acute included angle with the axial direction of the rotor core 11.

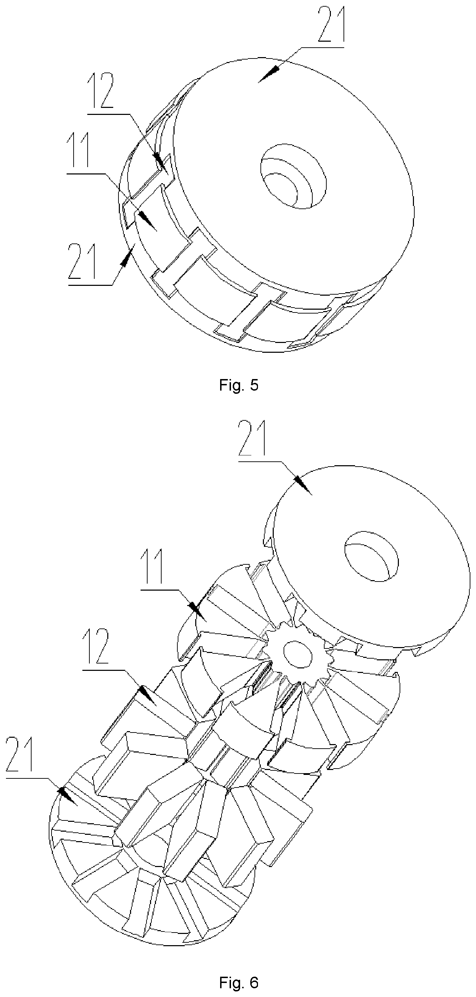

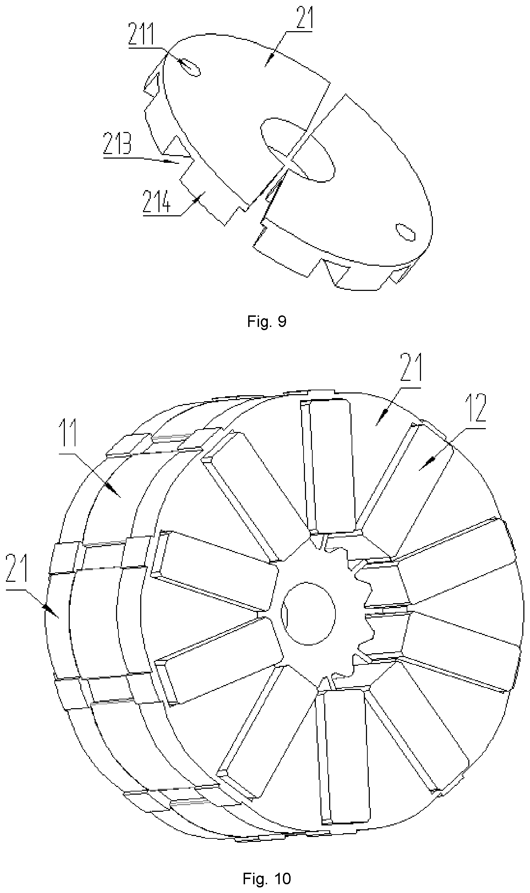

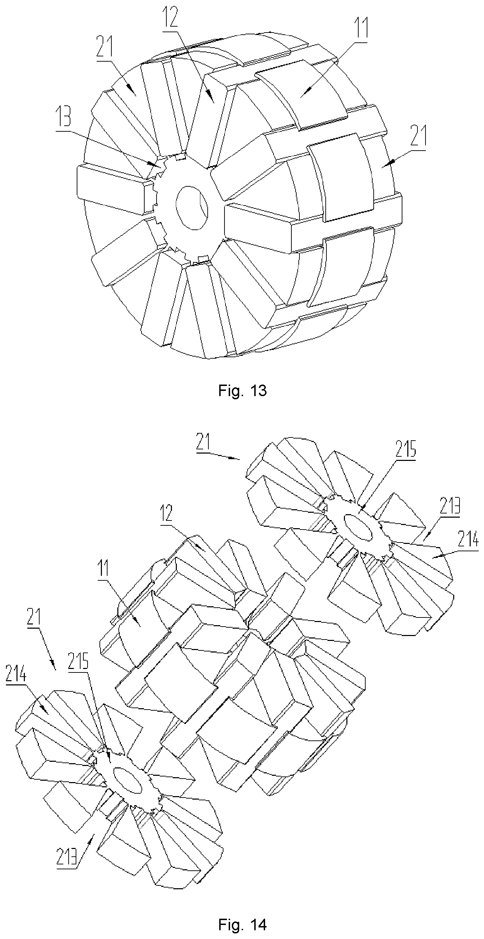

In one embodiment, at least two faces of the part of the first permanent magnet 12 axially protruding from the rotor core 11 are surrounded by the second permanent magnet 21, so that the magnetic flux lines of the second permanent magnet 21 have a path entering the rotor core 11 to form a magnetic circuit, and an improvement effect of magnetic flux concentration of the rotor is ensured. In the embodiments shown in Figs. 1 to 4, five faces of the part of the first permanent magnet 12 axially protruding from the rotor core 11 are all surrounded by the second permanent magnet 21; in the embodiments shown in Figs. 5 to 7, four faces of the part of the first permanent magnet 12 axially protruding from the rotor core 11 are surrounded by the second permanent magnet 21; in the embodiments shown in Figs. 10 to 12, three faces of the part of the first permanent magnet 12 axially protruding from the rotor core 11 are surrounded by the second permanent magnet 21; in the embodiments shown in Figs. 13 to 14, two faces of the part of the first permanent magnet 12 axially protruding from the rotor core 11 are surrounded by the second permanent magnet 21.

In one embodiment, the second permanent magnet 21 is provided with a hole structure 211. A shape of the hole structure is not limited to a circle, an ellipse, a square, or other shapes.

In one embodiment, projection is performed on an end surface of the rotor core 11 along the axial direction of the rotor core 11, and in a projection plane, a shape of the hole structure 211 is adapted to a shape of the rotor core 11 at a corresponding position. The magnetic flux lines of the second permanent magnet 21 enter the rotor core 11 to form a main magnetic field after being conducted by the end surface of the rotor core 11. The shape of the hole structure 211 adapted to the shape of the rotor core 11 at the corresponding position is able to improve utilization rates of the second permanent magnet 21 and the rotor core 11, and meanwhile, the magnetic field of the second permanent magnet 21 is able to be guided through reasonable design of a position and a shape of the hole structure 211, so that uniformity and unsaturation of magnetic field distribution of the rotor core 11 are ensured, and iron loss of the rotor is reduced.

In one embodiment, the second permanent magnet 21 is provided with an identification portion. The identification portion is used for identifying a polarity sequence of the second permanent magnet 21, and the identification portion is not limited to a letter identification, a shape identification or other forms of identification.

In one embodiment, the identification portion is disposed on an end surface of a side, close to and/or away from the rotor core 11, of the second permanent magnet 21. In one embodiment, the identification portions are disposed on end surfaces of sides, close to and away from the rotor core 11, of the second permanent magnet 21, that is, identification portions are provided on axial end surfaces of both sides of the second permanent magnet 21, so as to facilitate identification of the polarity of the second permanent magnet 21.

In one embodiment, the identification portion is arranged in an adjacent area of one hole structure 211. Matching between the identification portion and the hole structure 211 is able to ensure uniqueness of the polarity sequence of the second permanent magnet 21 after magnetization.

In one embodiment, the number of the hole structures 211 formed in the second permanent magnet 21 is not less than 2, so as to ensure symmetry of the rotor magnetic field and reduce torque ripple and harmonic loss caused by asymmetric magnetic field.

In one embodiment, the second permanent magnet 21 is an injection-molded magnetic steel. By using the injection-molded magnetic steel, on one hand, saturation of the rotor is able to be reduced, and the iron loss is able to be reduced; on the other hand, the injection-molded magnetic steel has higher shape freedom, and manufacturing difficulty of the second permanent magnet 21 and the rotor structure is able to be reduced.

In one embodiment, the second permanent magnet 21 is an injection-molded ferrite or an injection-molded neodymium iron boron, and the second permanent magnet 21 may also be injection-molded magnetic steel of other material types.

In one embodiment, the second permanent magnet 21 includes an annular portion 215 and magnetic pole portions 214, and the magnetic pole portions 214 are connected by the annular portion 215 to form an integral body. The annular part 215 is located at a radial inner side of the second permanent magnet 21, a slot 213 is formed between every two adjacent magnetic pole portions 214, and the magnetic pole portions 214 are arranged radially along a circumferential direction of the annular part 215, connected to the annular part 215 via connecting ribs, and formed into an integral body with the annular part 215. To ensure rotor strength, a magnetic bridge is arranged at an inner side of the rotor core 11, and the annular part 215 arranged at the radial inner side of the second permanent magnet 21 facilitates saturation of the magnetic bridge and reduces magnetic flux leakage of the first permanent magnet 12 at the inner magnetic bridge. In the present embodiment, the second permanent magnet 21 is connected into an integral structure by the annular part 215, that is, the second permanent magnet 21 is a single body rather than separate blocks.

In one embodiment, a through hole 13 is formed between the annular portion 215 and an end surface of the each of the first permanent magnets 12 on a side close to a rotating axis, and the through hole 13 penetrates through the rotor core 11 and the second permanent magnet 21 in the axial direction. Two circumferential faces of the part of the first permanent magnet 12 axially protruding from the rotor core 11 are surrounded by the second permanent magnet 21. The through hole 13 penetrating the rotor core 11 and the second permanent magnet 21 is able to serve as a positioning hole during a rotor manufacturing process; if the whole rotor is of an over-molded structure, the through hole 13 is able to also serve as a flow hole for molding compound.

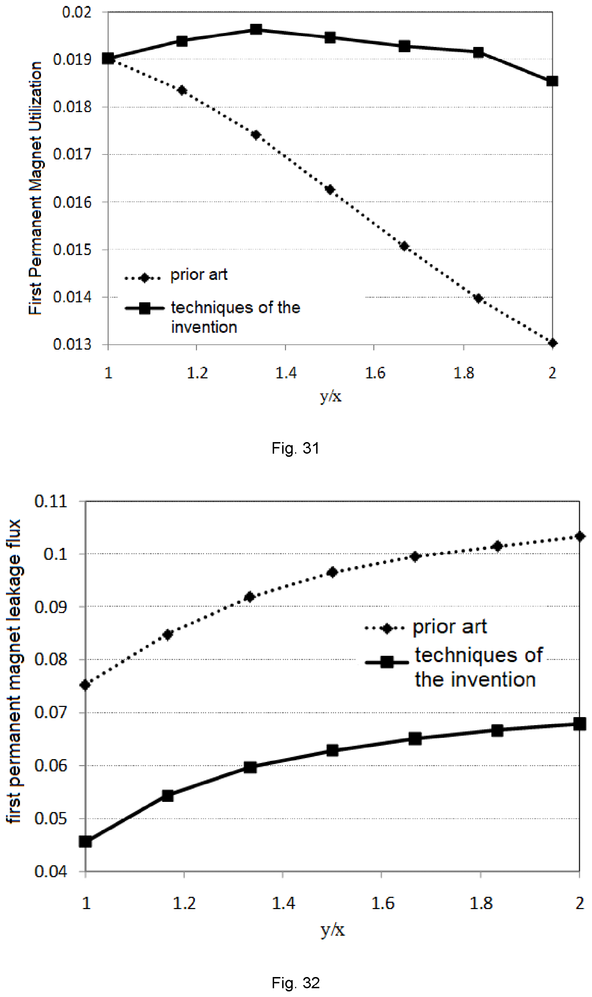

In one embodiment, the second permanent magnet 21 further includes first permanent magnet limiting portions 216 and magnetic pole portions 214, and at least one of the first permanent magnet limiting portions 216 is provided between each pair of adjacent magnetic pole portions 214 and connects the pair of adjacent magnetic pole portions 214, such that the magnetic pole portions 214 form an integral structure. As shown in Fig. 31, compared with a motor in the related art, a motor adopting the rotor structure according to the embodiment of the present invention has an obviously improved utilization rate of the first permanent magnet 12, which is mainly because the utilization rate of the part of the first permanent magnet 12 protruding from the rotor core 11 is improved under the rotor structure of the present invention. The first permanent magnet limiting parts 216 are arranged on the second permanent magnet 21, and since polarities thereof are repellent to polarities of the first permanent magnet 12, leakage magnetic flux of the first permanent magnet 12 is able to be suppressed. As shown in Fig. 32, compared with the motor in the related art, the motor adopting the rotor structure according to the embodiment of the present invention has significantly reduced leakage magnetic flux of the first permanent magnet 12.

In one embodiment, the first permanent magnet limiting portions 216 are located on a radial outer side of the slots 213 and are disposed in correspondence with the slots 213, and the each of the first permanent magnet limiting portions 216 is connected with two parts of the second permanent magnet 21 on both sides of the each of the first permanent magnet limiting portions 216 in a circumferential direction. Two circumferential faces and one radial face of the part of the first permanent magnet 12 axially protruding from the rotor core 11 are surrounded by the second permanent magnet 21.

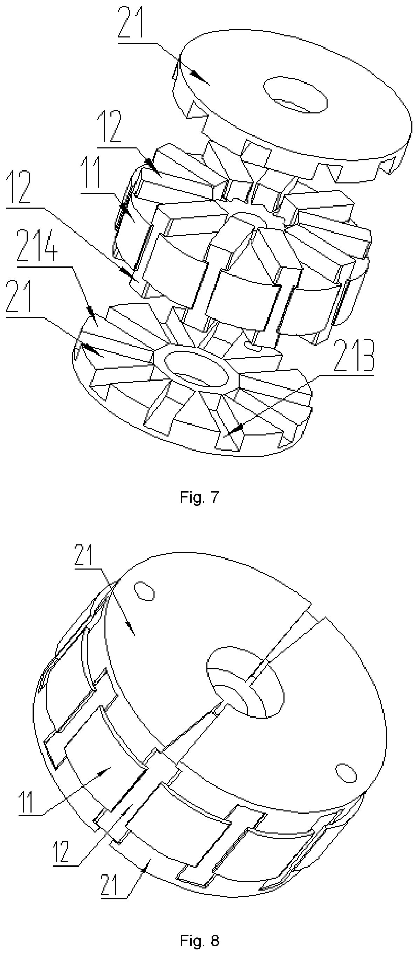

In one embodiment, at least one end of axial ends of the rotor core 11 is provided with the second permanent magnet 21, and a number of second permanent magnets 21 arranged in the rotor structure is not less than one. In some embodiments, the number of the second permanent magnets 21 arranged in the rotor structure is two, that is, the second permanent magnets 21 are arranged at both axial end parts of the rotor core 11, so that magnetic circuits at end parts of the motor are able to be regulated, higher torque density and higher motor efficiency are achieved, and high performance of the motor is ensured. In an axial direction of the rotor core 11, the rotor core 11 and the second permanent magnet 21 are attached together to reduce loss of magnetic flux linkage of the second permanent magnet 21 during flowing. It should be noted that a single second permanent magnet 21 herein refers to all the second permanent magnets 21 located on a certain axial plane at the axial end part of the rotor core 11. However, the single second permanent magnet 21 is not limited to an integral structure or a block structure; the second permanent magnet 21 shown in Fig. 7 is of an integral structure, and the second permanent magnet 21 shown in Figs. 8 to 9 is of a block structure.

In one embodiment, when the single second permanent magnet 21 is of a block structure, the number of blocks is not limited to two or more.

In one embodiment, the second permanent magnet 21 cooperates with the first permanent magnets 12 through the slots 213 provided thereon, the first permanent magnets 12 and the second permanent magnet 21 are both magnetic flux sources, and except the rotor core 11, no other magnetic conductive parts are arranged in the rotor structure.

In one embodiment, the slots 213 provided on the second permanent magnet 21 penetrate and/or do not penetrate the second permanent magnet 21, and a number of the slots 213 is the same as a number of poles of a rotor. When the slots 213 do not penetrate the second permanent magnet 21, the adjacent magnetic pole portions 214 are connected into an integral body through the slots 213, so that structural strength of the second permanent magnet 21 is able to be improved. Whether the slots 213 penetrate the second permanent magnet 21 are able to be selected in consideration of overall mechanical strength of the rotor structure.

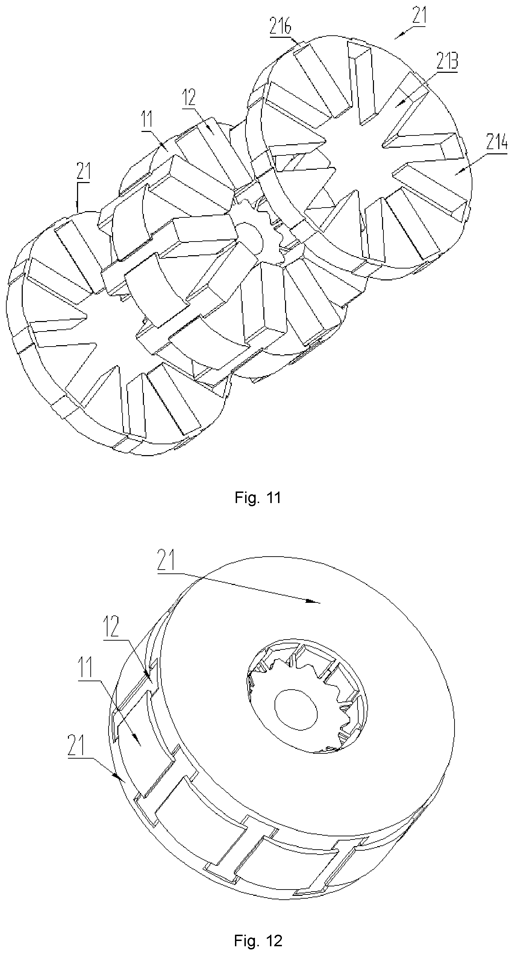

In one embodiment, the magnetic pole portions 214 are formed between adjacent slots 213; on a plane perpendicular to the axial direction of the rotor core 11, a radially outer side between the adjacent magnetic pole portions 214 is disconnected or connected, or part of a radially outer side between the adjacent magnetic pole portions 214 is disconnected, and part of the radially outer side between the adjacent magnetic pole portions 214 is connected; a radially inner side between the adjacent magnetic pole portions 214 is disconnected or connected, or part of the radially inner side between the adjacent magnetic pole portions 214 is disconnected, and part of the radially inner side between the adjacent magnetic pole portions 214 is connected. As shown in Figs. 5 to 7, in an implementation of the present invention, one magnetic pole portion 214 is formed between two adjacent slots 213, and outer sides between two adjacent magnetic pole portions 214 are disconnected, so that magnetic flux leakage at an outer circle of the rotor is able to be reduced; to ensure rotor strength, a magnetic bridge is arranged at an inner side of the rotor core 11, and the second permanent magnet 21 connected with inner sides of the magnetic pole portions 214 facilitates saturation of the magnetic bridge and reduces magnetic flux leakage of the first permanent magnet 12 at the inner magnetic bridge. As shown in Fig. 12, in another implementation of the present invention, one magnetic pole portion 214 is formed between two adjacent slots, and both outer sides and inner sides between two adjacent magnetic pole portions 214 are disconnected, so that processing difficulty of the second permanent magnet 21 is able to be reduced and processing cost is able to be lowered.

In one embodiment, a polar region of one of the magnetic pole portions 214 corresponds to a position of a polar region of the rotor core 11. That is, one polarity region of the magnetic pole portion 214 of the second permanent magnet 21 generates magnetic flux, and one polarity region at a corresponding position of the rotor core 11 serves as a magnetic circuit of the magnetic flux; the corresponding arrangement is able to shorten the magnetic circuit as much as possible and reduce magnetic loss.

In one embodiment, on a plane perpendicular to the axial direction of the rotor core 11, a shape of the polar region of the one of the magnetic pole portions 214 is adapted to a shape of a corresponding polar region of the rotor core 11, and one polarity region of each magnetic pole portion 214 fills the corresponding polarity region of the rotor core 11. The term "fill" herein means that no gap exists between the magnetic pole portion 214 and the rotor core 11 on the plane perpendicular to the axial direction of the rotor core 11.

In one embodiment, the first permanent magnets 12 and the second permanent magnet 21 are divided into a plurality of polar regions after being magnetized, and N and S poles of the first permanent magnets 12 are magnetized alternately in the radial direction and/or the tangential direction of the rotor core 11; and N and S poles of the second permanent magnet 21 are magnetized alternately in the axial direction of the rotor core 11.

A polarity of a side of the second permanent magnet 21 close to the rotor core 11 is a first polarity, and polarities of sides of the two first permanent magnets 12 adjacent to two sides of the second permanent magnet 21 close to the rotor core 11 are both the first polarity, that is, the polarity of the side of the second permanent magnet 21 close to the rotor core 11 is the same as the polarities of the sides of the first permanent magnets 12 adjacent to two sides of the second permanent magnet 21 close to the rotor core 11. In the embodiment shown in Fig. 23, the second permanent magnet 21 is axially magnetized, the first permanent magnet 12 is tangentially magnetized, and magnetization directions of both point to the rotor core 11 under one magnetic pole. With such a magnetization manner, superposition of magnetic flux linkages of the first permanent magnet 12 and the second permanent magnet 21 is able to be realized, and no-load magnetic flux linkage is improved.

In one embodiment, the axial height of the rotor core 11 is x, the axial height of the each of the first permanent magnets 12 is y, y > x, an axial height of the second permanent magnet 21 is z1, an axial height of each of the magnetic pole portion 214 is z2, z2 ≤ z1, where 0.2*(y-x) ≤ z1 ≤ 1.6*(y-x).

In one embodiment, 2*z2 ≥ (y-x), which is able to avoid interference between the first permanent magnet 12 and the second permanent magnet 21 and realize assembly of the first permanent magnet 12 and the second permanent magnet 21.

In one embodiment, z2 = 0.5*(y-x), which is able to form optimal matching, effectively avoid a gap between the first permanent magnet 12 and the second permanent magnet 21, and reduce magnetic loss.

In one embodiment, 0.03 ≤ (z1-z2)/z1 ≤ 0.7, so that a part of each slot 213 not penetrating the second permanent magnet 21 has a certain axial thickness proportion in the second permanent magnet 21, thereby ensuring structural strength of the second permanent magnet 21.

In one embodiment, on a plane perpendicular to the axial direction of the rotor core 11, a length of a connecting line between a rotor central axis and any point on an end edge of the second permanent magnet 21 close to a rotating shaft side is Di2, an inner diameter of the rotor core 11 is Di1, min(Di2) ≥ 0.5*Di1. A rotating shaft needs to be assembled at an inner hole of the rotor core 11. On one hand, the above dimensional relationship is able to, provide a space for assembly of the rotating shaft; on the other hand, under the condition that the assembly of the rotating shaft is not affected, the inner hole of the second permanent magnet 21 is able to be filled with molding compound or other materials to enhance rotor strength.

In one embodiment, min(Di2) = 0.5*Di1, that is, an inner diameter of the second permanent magnet 21 is the same as that of the rotor core 11, so that a magnetic flux supply area of the second permanent magnet 21 is able to be increased, and a magnetic flux linkage contribution of the second permanent magnet 21 is able to be improved.

In one embodiment, on a plane perpendicular to the axial direction of the rotor core 11, a length of a connecting line between a central axis of the rotor and any point on an end edge of the second permanent magnet 21 on a side close to the rotating shaft is Di2, a length of the connecting line between the central axis of the rotor and a center of an end edge of a pole of the each of the first permanent magnets 12 on a side close to the rotating shaft is Di3, max (Di2) ≥ 0.75*Di3. In one embodiment, max(Di2) ≥ Di3. At a position close to the rotating shaft side, on the one hand, a magnetic circuit area of the rotor core 11 is too small, and the iron core is prone to saturation; on the other hand, a contribution degree of the permanent magnet here to torque is small, and a utilization rate of the permanent magnet is low. Therefore, limiting the relationship between Di2 and Di3 is able to improve the utilization rate of the second permanent magnet 21, reduce the saturation degree of the rotor core 11 and lower loss.

In one embodiment, limiting protrusions 111 are arranged on an outer peripheral side of the rotor core 11, and the limiting protrusions 111 extend laterally from two circumferential sides of the rotor core 11 and form a radial limit for the first permanent magnet 12.

In this embodiment, the limiting protrusions 111 are located at an outermost periphery of the rotor core 11 and extend circumferentially from two circumferential side faces of the rotor core 11, and two limiting protrusions 111 extending oppositely are arranged at an interval, so that an open slot structure is formed while the first permanent magnet 12 is radially limited, and radial magnetic flux leakage of the first permanent magnet 12 is reduced.

In one embodiment, an outer peripheral wall of the rotor core 11 includes a plurality of arc-shaped surfaces disposed at intervals, and along a circumferential direction of the rotor core 11, a distance between a single arc-shaped surface of the plurality of arc-shaped surfaces and the central axis of the rotor core 11 gradually decreases from a middle to two ends. With such arrangement, an air gap structure with a non-uniform thickness in a rotor radial direction is able to be formed between the outer peripheral wall of the rotor core 11 and an inner peripheral wall of a stator structure, so that magnetic field harmonic content is able to be reduced, motor torque ripple is able to be reduced, and motor vibration and noise is able to be weakened.

In this embodiment, since the rotor core 11 forms an open slot structure, an outer peripheral structure of the rotor core 11 is not a complete circle, but a plurality of arc segments arranged at intervals, and a middle part of each arc segment protrudes radially outward to form an arc structure staggered from a circle center of an outer circle of the rotor, so that air gap magnetic flux density between a stator and the rotor is able to be improved, a sinusoidal curve is able to be formed more favorably, and motor working performance is able to be improved.

In one embodiment, on a plane perpendicular to the axial direction of the rotor core 11, a length of a connecting line between the rotor central axis and any point on an end edge of the second permanent magnet 21 close to an air gap side is Do2, a length of a connecting line between the rotor central axis and any point on an end edge of the rotor core 11 close to the air gap side is Do1, max(Do2) ≤ max(Do1).

In one embodiment, max(Do2) ≤ 0.98*max(Do1).

For a motor, on the one hand, the stator structure is arranged on an outer side of the rotor structure in a sleeving manner, and an air gap is arranged between the rotor structure and the stator structure, and such arrangement is able to provide a space for assembly of the stator structure; on the other hand, in order to prevent the first permanent magnet 12 from falling off after being assembled into the rotor core 11, the limiting protrusion 111 is arranged on an outer circle of the rotor core 11, the magnetic circuit area of the limiting protrusion 111 is small and prone to saturation, and a position of the limiting protrusion 111 is close to the air gap and is a magnetic flux gathering position where iron loss is large, max(Do2) ≤ max(Do1) is able to enable magnetic flux of the second permanent magnet 21 to avoid the position of the limiting protrusion 111, so as to reduce motor iron loss. In a motor with a small iron loss proportion, max(Do2) = max(Do1) is a better choice. In a motor with a large iron loss proportion, In one embodiment, max(Do2) ≤ 0.98*max(Do1). It should be noted that the end edge of the second permanent magnet 21 close to the air gap side is not limited to a complete circular arc, a segmented circular arc, a combination of a circular arc and a straight line, a straight line or other shapes.

In one embodiment, on a plane perpendicular to the axial direction of the rotor core 11, a length of a connecting line between a central axis of the rotor and any point on an end edge of the second permanent magnet 21 on a side close to an air gap is Do2, a length of a connecting line between the central axis of the rotor and a center of an end edge of a pole of the each of the first permanent magnets 12 on a side close to the air gap side is Do3, max (Do2) ≤ 1.2*Do3.

In one embodiment, |max(Do2)-Do3| ≤ 1.5mm.

Limiting a positional relationship between the first permanent magnet 12 and the second permanent magnet 21 close to the air gap side is able to enable magnetic flux lines of the first permanent magnet 12 and the second permanent magnet 21 to have an optimal superposition effect at a position close to the air gap side, so as to improve air gap magnetic flux density.

In one embodiment, the each of the first permanent magnets 12 is a sintered permanent magnet or an injection-molded permanent magnet, which is able to be determined according to the usage situation and the usage temperature of the motor.

In one embodiment, an intrinsic coercivity of the second permanent magnet 21 is lower than an intrinsic coercivity of the first permanent magnets 12. Compared with the second permanent magnet 21 arranged at an axial end part of the rotor core 11, the first permanent magnet 12 is embedded in the rotor core 11 and directly affected by a stator demagnetizing field. Arranging the first permanent magnet 12 to have a relatively high intrinsic coercive force is able to enhance the demagnetization resistance of the motor.

In one embodiment, the rotor core 11 is formed by laminating silicon steel sheets, or the rotor core 11 is an injection-molded magnetic steel, and on a plane perpendicular to the axial direction of the rotor core 11, N and S poles of the rotor core 11 are magnetized alternately in a radial direction.

The rotor core 11 is a path carrier for magnetic flux linkage of the first permanent magnet 12 and the second permanent magnet 21 to flow, and has functions of dredging and guiding the magnetic flux linkage.

In one embodiment, the rotor core 11 is formed by laminating silicon steel sheets and has good magnetic conductivity.

In one embodiment, the rotor core 11 is an injection-molded magnetic steel, and after magnetization, has a traction effect on magnetic flux linkage of the first permanent magnet 12 and the second permanent magnet 21, and is able to also guide the magnetic flux linkage to enter the air gap and the stator after magnetic flux concentration.

In one embodiment, the second permanent magnet 21 is injection-molded over or filled onto the rotor core 11.

In one embodiment, the second permanent magnet 21, the rotor core 11 and the first permanent magnets 12 are separately manufactured and then are assembled together.

The second permanent magnet 21 and the first permanent magnet 12 is able to be processed and manufactured in different manners, so that a rotor manufacturing manner is able to be selected according to production conditions, and flexibility of production and manufacturing of the rotor structure is improved.

In one embodiment, the rotor structure is filled with a molding compound at ends and internal gaps and is molded into a whole body, so that overall structural strength of a rotor assembly is able to be ensured.

In one embodiment, the rotor structure is assembled and fixed together by using a fastener. The rotor is able to be fixed together by gluing, rivet riveting or other fastening manners, so that a rotor production process is able to be simplified and production cost is able to be reduced.

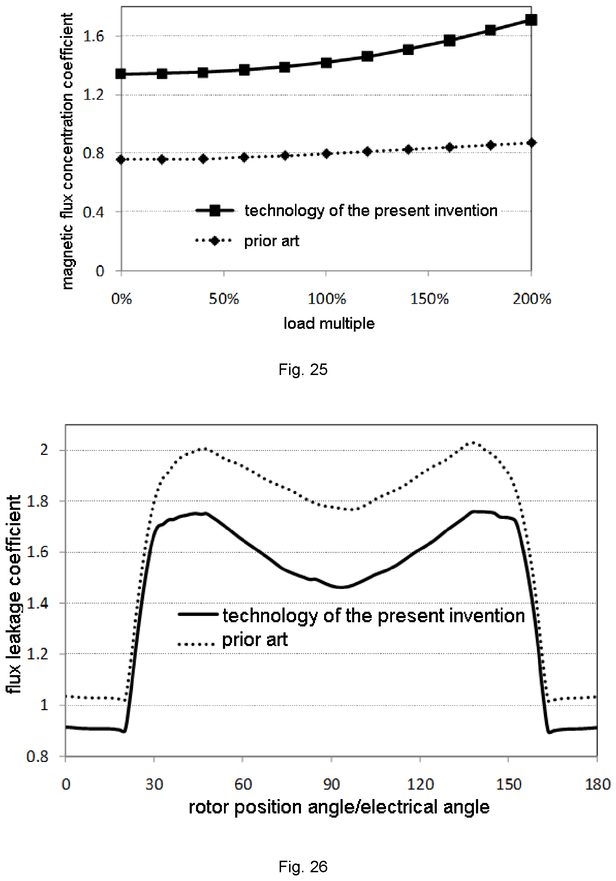

As shown in Fig. 25, compared with a motor in the related art, a motor adopting the rotor structure according to the embodiment of the present invention has a magnetic flux concentration coefficient increased by more than 60%, and magnetic flux concentration performance is obviously improved.

As shown in Fig. 26, compared with the motor in the related art, the motor adopting the rotor structure according to the embodiment of the present invention has a magnetic flux leakage coefficient reduced by more than 10%, so that magnetic flux leakage is effectively reduced and motor performance is improved.

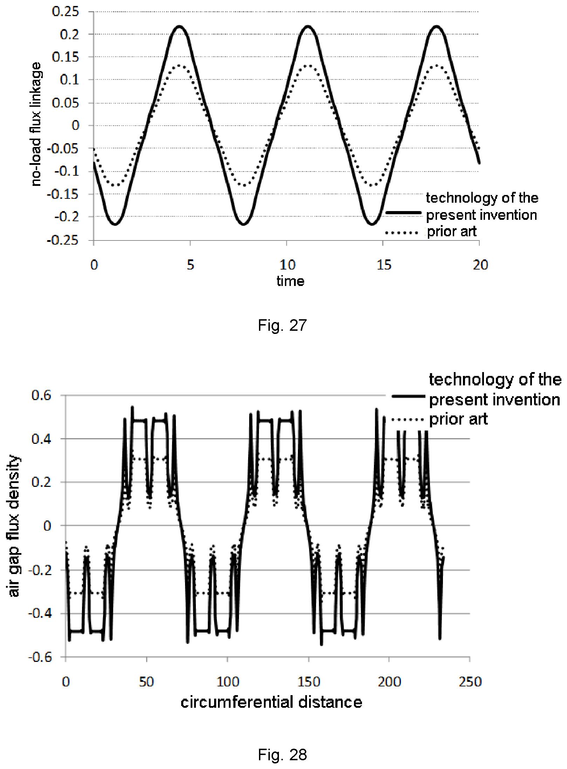

As shown in Fig. 27, compared with the motor in the related art, the motor adopting the rotor structure according to the embodiment of the present invention has a no-load magnetic flux linkage increased by more than 50%, so that the no-load magnetic flux linkage is effectively increased and the motor performance is improved.

As shown in Fig. 28, compared with the motor in the related art, the motor adopting the rotor structure according to the embodiment of the present invention has an air gap magnetic flux density increased by more than 60%, so that the air gap magnetic flux density is effectively increased, motor torque density is improved, and motor output is increased.

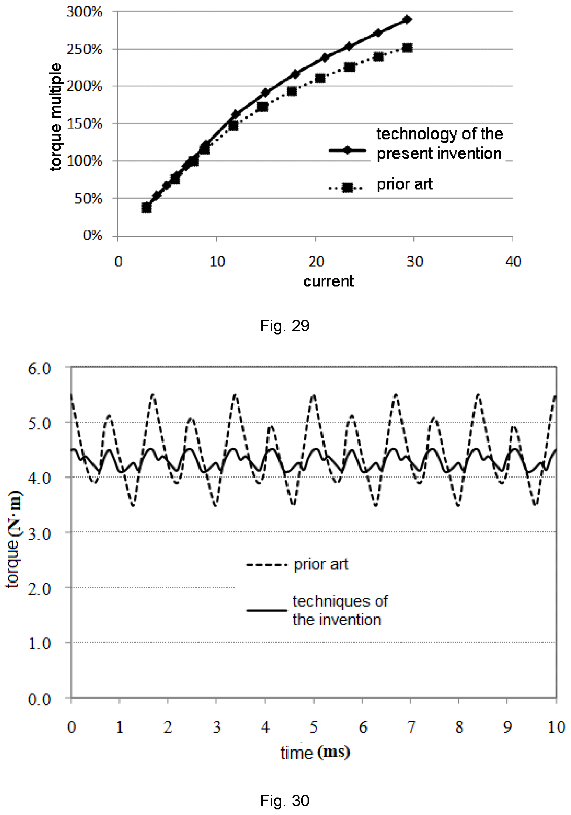

As shown in Fig. 29, compared with the motor in the related art, the motor adopting the rotor structure according to the embodiment of the present invention has a torque multiple advantage gradually obvious along with increase of current, so that a higher torque multiple is achieved, the motor torque density is improved, and the motor output is increased.

As shown in Fig. 30, compared with the motor in the related art, the motor adopting the rotor structure according to the embodiment of the present invention has a torque ripple reduced by more than 30%, the torque ripple is obviously reduced, and electromagnetic vibration and noise of the motor is able to be effectively weakened.

According to an embodiment of the present invention, an electric motor includes a stator structure and a rotor structure above-mentioned, the stator structure is sleeved on an outer peripheral side of the rotor structure.

In one embodiment, the axial height of the rotor core 11 is x; the stator structure includes a stator core 31, and an axial height of the stator core 31 is w, x ≥ w. In some embodiments, x≥1.05*w. In the present invention, magnetic flux lines at an end part of the rotor core 11 are able to enter the rotor core 11 under a magnetic force guiding effect to become main magnetic flux, and rotor magnetic field strength is able to also be improved without depending on an excessively high magnetic conductivity effect of the stator core 31. Therefore, limiting the relationship between x and w is able to improve the utilization rate of the stator core 31 and reduce the rotor saturation degree at the same time.

In one embodiment, an axial height of the rotor structure is v, and an axial height of the stator core 31 is w, wherein v ≥ 1.4*w. Limiting the relationship between v and w is able to further improve the utilization rate of the stator core 31 under the condition that proper saturation of the stator is ensured.

It should be noted that the terms "first" and "second" in the description, claims, and accompanying drawings of the present invention are used to distinguish similar objects, and are not necessarily used to describe a specific sequence or order. It should be understood that the data so used may be interchanged where appropriate so that the embodiments of the present invention described herein can be implemented in sequences other than those illustrated or described herein.

The foregoing descriptions are merely some embodiments of the present invention, but are not intended to limit the present invention. For those skilled in the art, the present invention may have various modifications and variations. Any modifications, equivalent replacements, improvements and the like made within the spirit and principle of the present invention shall fall within the scope of protection of the present invention.

## Claims

1. A rotor structure, comprising a rotor core (11), first permanent magnets (12) and a second permanent magnet (21), wherein the rotor core (11) is provided with mounting slots, the first permanent magnets (12) are mounted in the mounting slots respectively, and in an axial direction of the rotor core (11), an axial height of each of the first permanent magnets (12) is greater than an axial height of the rotor core (11); at least one axial end of the rotor core (11) is provided with the second permanent magnet (21), slots (213) are disposed on the second permanent magnet (21), a part of the each of the first permanent magnets (12) protruding from the rotor core (11) in the axial direction is inserted into a corresponding slot of the slots (213), the first permanent magnets (12) are magnetized in a radial direction and/or a tangential direction of the rotor core (11), and the second permanent magnet (21) is magnetized in the axial direction of the rotor core (11), at least two faces of the part of the each of the first permanent magnets (12) protruding from the rotor core (11) in the axial direction are surrounded by the second permanent magnet (21).

2. The rotor structure according to claim 1, wherein the second permanent magnet (21) is provided with at least one hole structure (211).

3. The rotor structure according to claim 2, wherein projection is performed on an end surface of the rotor core (11) along the axial direction of the rotor core (11), and in a projection plane, a shape of the hole structure (211) is adapted to a shape of the rotor core (11) at a corresponding position.

4. The rotor structure according to claim 2, wherein the second permanent magnet (21) is provided with an identification portion.

5. The rotor structure according to claim 4, wherein the identification portion is disposed on an end surface of a side of the second permanent magnet (21) close to and/or away from the rotor core (11).

6. The rotor structure according to claim 4, wherein the identification portion is provided in an adjacent area of the at least one hole structure (211).

7. The rotor structure according to claim 2, wherein a number of the at least one hole structure (211) arranged on the second permanent magnet (21) is not less than 2.

8. The rotor structure according to claim 1, wherein the second permanent magnet (21) is an injection-molded magnetic steel.

9. The rotor structure according to claim 1, wherein the second permanent magnet (21) comprises an annular portion (215) and magnetic pole portions (214), and the magnetic pole portions (214) are connected by the annular portion (215) to form an integral body.

10. The rotor structure according to claim 9, wherein the annular portion (215) is located on a radial inner side of the second permanent magnet (21), at least one of the slots (213) is formed between each pair of adjacent magnetic pole portions (214), the magnetic pole portions (214) are radial along a circumferential direction of the annular portion (215), and are connected to the annular portion (215) via connecting ribs, thereby forming the integral body with the annular portion (215).

11. The rotor structure according to claim 9, wherein a through hole (13) is formed between the annular portion (215) and an end surface of the each of the first permanent magnets (12) on a side close to a rotating axis, and the through hole (13) penetrates through the rotor core (11) and the second permanent magnet (21) in the axial direction.

12. The rotor structure according to claim 1, wherein the second permanent magnet (21) further comprises first permanent magnet limiting portions (216) and magnetic pole portions (214), and at least one of the first permanent magnet limiting portions (216) is provided between each pair of adjacent magnetic pole portions (214) and connects the pair of adjacent magnetic pole portions (214), such that the magnetic pole portions (214) form an integral structure.

13. The rotor structure according to claim 12, wherein the first permanent magnet limiting portions (216) are located on a radial outer side of the slots (213) and are disposed in correspondence with the slots (213), and the each of the first permanent magnet limiting portions (216) is connected with the second permanent magnet (21) on both sides of the each of the first permanent magnet limiting portions (216) in a circumferential direction.

14. The rotor structure according to claim 1, wherein the slots (213) provided on the second permanent magnet (21) penetrate and/or do not penetrate the second permanent magnet (21), and a number of the slots (213) is the same as a number of poles of a rotor.

15. The rotor structure according to claim 1, wherein the second permanent magnet (21) cooperates with the first permanent magnets (12) through the slots (213) provided thereon, the first permanent magnets (12) and the second permanent magnet (21) are both magnetic flux sources, and except the rotor core (11), no other magnetic conductive parts are arranged in the rotor structure.

16. The rotor structure according to claim 12, wherein the magnetic pole portions (214) are formed between adjacent slots (213); on a plane perpendicular to the axial direction of the rotor core (11), a radially outer side between the adjacent magnetic pole portions (214) is disconnected or connected, or part of a radially outer side between the adjacent magnetic pole portions (214) is disconnected, and part of the radially outer side between the adjacent magnetic pole portions (214) is connected; a radially inner side between the adjacent magnetic pole portions (214) is disconnected or connected, or part of the radially inner side between the adjacent magnetic pole portions (214) is disconnected, and part of the radially inner side between the adjacent magnetic pole portions (214) is connected.

17. The rotor structure according to claim 16, wherein a polar region of one of the magnetic pole portions (214) corresponds to a position of a polar region of the rotor core (11), and on a plane perpendicular to the axial direction of the rotor core (11), a shape of the polar region of the one of the magnetic pole portions (214) is adapted to a shape of a corresponding polar region of the rotor core (11).

18. The rotor structure according to claim 1, wherein at least one end of axial ends of the rotor core (11) is provided with the second permanent magnet (21), and a number of second permanent magnets (21) arranged in the rotor structure is not less than one.

19. The rotor structure according to claim 1, wherein the first permanent magnets (12) and the second permanent magnet (21) are divided into a plurality of polar regions after being magnetized, and N and S poles of the first permanent magnets (12) are magnetized alternately in the radial direction and/or the tangential direction of the rotor core (11); and N and S poles of the second permanent magnet (21) are magnetized alternately in the axial direction of the rotor core (11).

20. The rotor structure according to claim 1 or 19, wherein a polarity of the second permanent magnet (21) on a side close to the rotor core (11) is a first polarity, and polarities of two first permanent magnets (12) located on two sides adjacent to the second permanent magnet (21) on sides close to the rotor core (11) are the first polarity.

21. The rotor structure according to claim 16, wherein the axial height of the rotor core (11) is x, the axial height of the each of the first permanent magnets (12) is y, y > x, an axial height of the second permanent magnet (21) is z1, an axial height of each of the magnetic pole portion (214) is z2, z2 ≤ z1, where 0.2*(y-x) ≤ z1 ≤ 1.6*(y-x).

22. Rotor structure according to claim 21, wherein 2*z2 ≥ (y-x).

23. The rotor structure according to claim 22, wherein z2=0.5*(y-x).

24. The rotor structure according to any one of claims 1 to 19, wherein on a plane perpendicular to the axial direction of the rotor core (11), a length of a connecting line between a central axis of the rotor and any point on an end edge of the second permanent magnet (21) on a side close to the rotating shaft is Di2, a length of the connecting line between the central axis of the rotor and a center of an end edge of a pole of the each of the first permanent magnets (12) on a side close to the rotating shaft is Di3, max (Di2) ≥ 0.75*Di3.

25. The rotor structure according to claim 24, wherein max (Di2) ≥ Di3.

26. The rotor structure according to claim 1, wherein an outer peripheral wall of the rotor core (11) comprises a plurality of arc-shaped surfaces disposed at intervals, and along a circumferential direction of the rotor core (11), a distance between a single arc-shaped surface of the plurality of arc-shaped surfaces and the central axis of the rotor core (11) gradually decreases from a middle to two ends.

27. The rotor structure according to any one of claims 1 to 19, wherein on a plane perpendicular to the axial direction of the rotor core (11), a length of a connecting line between a central axis of the rotor and any point on an end edge of the second permanent magnet (21) on a side close to an air gap is Do2, a length of a connecting line between the central axis of the rotor and a center of an end edge of a pole of the each of the first permanent magnets (12) on a side close to the air gap is Do3, max (Do2) ≤ 1.2*Do3.

28. The rotor structure according to claim 27, wherein |max (Do2)-Do3| ≤ 1.5mm.

29. The rotor structure according to claim 8, wherein the second permanent magnet (21) is an injection-molded ferrite or an injection-molded neodymium iron boron.

30. The rotor structure according to claim 1, wherein the each of the first permanent magnets (12) is a sintered permanent magnet or an injection-molded permanent magnet.

31. The rotor structure according to claim 1, wherein an intrinsic coercivity of the second permanent magnet (21) is lower than an intrinsic coercivity of the first permanent magnets (12).

32. The rotor structure according to claim 1, wherein the rotor core (11) is formed by laminating silicon steel sheets, or the rotor core (11) is an injection-molded magnetic steel, and on a plane perpendicular to the axial direction of the rotor core (11), N and S poles of the rotor core (11) are magnetized alternately in a radial direction.

33. The rotor structure according to claim 1, wherein the second permanent magnet (21) is injection-molded over or filled onto the rotor core (11), or the second permanent magnet (21), the rotor core (11) and the first permanent magnets (12) are separately manufactured and then are assembled together.

34. The rotor structure according to claim 1, wherein the rotor structure is filled with a molding compound at ends and internal gaps and is molded into a whole body, or the rotor structure is assembled and fixed together by using a fastener.

35. An electric motor, comprising a stator structure and the rotor structure as claimed in any one of claims 1 to 34, and the stator structure is sleeved on an outer peripheral side of the rotor structure.

36. The electric motor according to claim 35, wherein the axial height of the rotor core (11) is x; the stator structure comprises a stator core (31), an axial height of the stator core (31) is w, x ≥ w.

37. The electric motor according to claim 36, wherein x ≥ 1.05*w.

38. The electric motor according to claim 36, wherein an axial height of the rotor structure is v, and an axial height of the stator core (31) is w, wherein v ≥ 1.4*w.
